# EUROPÄISCHE PATENTSCHRIFT

(11) **EP 3 337 317 B1**
(45) Veröffentlichungstag und Bekanntmachung des Hinweises auf die Patenterteilung: **03.07.2019**
(21) Anmeldenummer: 16753393.4
(22) Anmeldetag: 18.08.2016
(51) Int. Cl.: A01M 7/00

(54) **AUFHÄNGUNG FÜR EIN VERTEILERGESTÄNGE EINER LANDWIRTSCHAFTLICHEN MASCHINE**
BOOM SUSPENSION FOR AGRICULTURAL MACHINE
SUSPENSION D'UNE RAMPE DE PULVÉRISATION POUR UNE MACHINE AGRICOLE

(30) Priorität: 19.08.2015 DE 102015113721
(43) Veröffentlichungstag der Anmeldung: 27.06.2018
(73) Patentinhaber: Amazonen-Werke H. Dreyer GmbH & Co. KG, 49205 Hasbergen (DE)
(72) Erfinder: BORCHERT, Anna-Gret, 49090 Osnabrück (DE)
(74) Vertreter: Grünecker Patent- und Rechtsanwälte PartG mbB
(86) Internationale Anmeldenummer: PCT/EP2016/069577
(87) Internationale Veröffentlichungsnummer: WO 2017/029349

(56) Entgegenhaltungen:
- WO-A1-2010/100542
- DE-A1- 10 314 686
- DE-A1-102008 007 312
- US-A1- 2004 158 381

## Beschreibung

Die Erfindung bezieht sich auf eine Aufhängung für eine landwirtschaftliche Maschine, eine landwirtschaftliche Maschine mit einer solchen Aufhängung und ein Verfahren zum Betreiben einer landwirtschaftlichen Maschine. Eine Aufhängung für eine landwirtschaftliche Maschine mit den Merkmalen des Oberbegriffs des Anspruchs 1 ist beispielsweise aus DE 10 2008 007 312 A1 bekannt.

Als Feldspritzen ausgebildete landwirtschaftliche Maschinen weisen ein Verteilergestänge auf, das durch eine in Fahrtrichtung weisende Gestängeachse mit einem Rahmen der Maschine verbunden ist. Derartige Verteilergestänge können eine Arbeitsbreite von über 35 m aufweisen und dienen dazu, Düngemittel oder Pflanzenschutzmittel auf einem Feld auszubringen. Aufgrund der großen Arbeitsbreite kommt es beim Beschleunigen bzw. Abbremsen der Feldspritze zum Verbiegen und Aufschwingen des Gestänges. Die Verformung und damit einhergehende unkontrollierte Bewegung des Verteilergestänges verursacht eine ungleichmäßige Verteilung des auszubringenden Materials. Bei starken Beschleunigungskräften kann es überdies zur Überbelastung des Verteilergestänges kommen, wodurch dieses in Extremfällen irreparabel beschädigt wird.

Aus dem Stand der Technik sind verschiedene Maßnahmen bekannt, um ein Schwingungen des Verteilergestänges zu dämpfen. Hierzu sind in erster Linie passive Dämpfungselemente bekannt, wie beispielsweise aus DE 20 018 716 U1, bei der das Verteilergestänge pendelnd am Rahmen befestigt und über Dämpfungselemente mit dem Rahmen gekoppelt ist. Damit ist aber nur eine Dämpfung der Pendelschwingung um die in Fahrtrichtung weisende Gestängeachse, also in einer vertikalen Ebene, möglich. Schwingungen des Verteilergestänges in Fahrtrichtung, die beispielsweise beim Anfahren oder Abbremsen oder beim Eintreten in eine Kurvenfahrt bzw. beim Verlassen der Kurve auftreten können, werden durch diese Aufhängung nicht gedämpft.

In der eingangs genannten DE 10 2008 007 312 A1 ist beschrieben, dass Schwingungen in Fahrtrichtung mit Hilfe von Schwingungstilgern gedämpft werden können, die an den äußeren Enden des Verteilergestänges angebracht sind. Diese Lösung ist jedoch konstruktiv anspruchsvoll, da die Tilgerfrequenz exakt auf die Resonanzfrequenz des Verteilergestänges abgestimmt sein muss. Außerdem wird damit die Masse am äußersten Ende des Gestänges erhöht.

Der Erfindung liegt die Aufgabe zugrunde, eine Aufhängung für eine landwirtschaftliche Maschine anzugeben, die eine verbesserte Dämpfung von Schwingungen des Vertreilergestänges, hervorgerufen durch Beschleunigungskräfte, ermöglicht. Der Erfindung liegt ferner die Aufgabe zugrunde, eine landwirtschaftliche Maschine mit einer derartigen Aufhängung und ein entsprechendes Verfahren zum Betreiben der landwirtschaftlichen Maschine anzugeben.

Erfindungsgemäß wird diese Aufgabe durch die Aufhängung mit den Merkmalen des Anspruchs 1 und alternativ durch die Aufhängung mit den Merkmalen des nebengeordneten Anspruchs 20 gelöst. Mit Blick auf die landwirtschaftliche Maschine wird die Aufgabe durch den Gegenstand des Anspruchs 16 und mit Blick auf das Verfahren durch den Gegenstand des Anspruchs 17 gelöst.

Die Erfindung umfasst gezogene, selbstfahrende und getragene Maschinen. Demzufolge erstreckt sich die Erfindung auf Fahrzeugkombinationen, umfassend ein Zugfahrzeug und eine Maschine, auf selbstfahrende Maschinen sowie auf Maschinen, die direkt von einem Trägerfahrzeug bzw. einem Schlepper getragen sind, bei denen jeweils eine erfindungsgemäße Aufhängung vorgesehen ist.

Der Erfindung liegt der Gedanke zugrunde, eine Aufhängung für eine landwirtschaftliche Maschine mit einem Rahmen und einem Verteilergestänge anzugeben, das durch wenigstens eine in Fahrtrichtung weisende Gestängeachse mit dem Rahmen verbunden ist. Die Gestängeachse ist schwenkbar mit dem Rahmen verbunden und durch einen ersten Stellantrieb verschwenkbar. Zusätzlich oder alternativ sind das Verteilergestänge und der Rahmen durch wenigstens eine Pendelplatte gelenkig gekoppelt oder gelenkig koppelbar, wobei das Verteilergestänge durch einen zweiten Stellantrieb verschwenkbar ist.

Die Erfindung ermöglicht eine aktive Regelung bzw. aktive Steuerung des Verteilergestänges, wodurch Schwingungen, hervorgerufen durch Beschleunigungskräfte, wirksamer gedämpft werden können, als dies bei den bekannten passiven Systemen der Fall ist. Die Erfindung ermöglicht darüber hinaus die Implementation einer vorausschauenden Regelung, bei der eine prognostizierte Beschleunigung bzw. prognostizierte Beschleunigungskräfte erfasst werden und durch eine entsprechende Vorbeschleunigung des Verteilergestänges wirksam verringert werden. Unter dem Begriff "Beschleunigung" werden generell negative und positive Beschleunigungen verstanden.

Konkret sieht die Erfindung hierfür zwei Maßnahmen vor, die sowohl einzeln, für sich genommen als auch in Kombination miteinander zu der gewünschten verbesserten Dämpfungswirkung beitragen. Eine erste Maßnahme zur Schwingungsdämpfung besteht darin, dass die Gestängeachse schwenkbar mit dem Rahmen verbunden ist und durch einen ersten Stellantrieb verschwenkbar ist. Da die Gestängeachse in Fahrtrichtung weist, ist ein aktives Verschwenken des Verteilergestänges beispielsweise um die Hochachse bzw. vertikale Achse möglich, um Gierschwingungen zu dämpfen. Beispielsweise ist es möglich, durch eine geeignete Regelung, das Verteilergestänge vor dem Einfahren in das Vorgewende in Drehrichtung vorzubeschleunigen, so dass die Gesamtbeschleunigung, die erforderlich ist, um die Zielgeschwindigkeit des Verteilergestänges zu erreichen, verringert wird. Damit werden die Beschleunigungskräfte, die auf das Verteilergestänge wirken, wirksam verringert. Außerdem wird eine gleichmäßige Kurvenbewegung des Verteilergestänges erreicht, wodurch die homogene Ausbringung des Materials verbessert wird.

Alternativ oder zusätzlich zu der aktiv verschwenkbaren Gestängeachse ist als zweite Maßnahme erfindungsgemäß vorgesehen, dass das Verteilergestänge und der Rahmen durch wenigstens eine Pendelplatte gelenkig gekoppelt oder gelenkig koppelbar sind, wobei das Verteilergestänge durch einen zweiten Stellantrieb verschwenkbar ist. Die gelenkige Koppelung, die entweder permanent vorgesehen ist (gelenkig gekoppelt) oder zugeschaltet werden kann (gelenkig koppelbar), ermöglicht eine translatorische Bewegung des Verteilergestänges. Die translatorische Bewegung kann beispielsweise in oder entgegen der Fahrtrichtung erfolgen, wodurch Beschleunigungskräfte wirksam gedämpft werden können, die beim Anfahren bzw. beim Abbremsen der Maschine auf das Verteilergestänge wirken. Auch hier ist eine aktive Regelung, wie im Zusammenhang mit der Gestängeachse beschrieben, möglich, bei der prognostizierte Beschleunigungen bzw. Beschleunigungskräfte berücksichtigt werden, so dass frühzeitig Gegenmaßnahmen zur Begrenzung der Gestängebelastung eingeleitet werden können, beispielsweise durch eine Vorbeschleunigung des Verteilergestänges in oder entgegen der Fahrtrichtung. Ein Beispiel hierfür ist der Abbremsvorgang nach der Feldbearbeitung, bevor die Maschine für die Straßenfahrt umgerüstet wird.

Die beiden vorstehend erläuterten Maßnahmen können jeweils für sich genommen oder in Kombination miteinander verwendet werden. Es ist auch möglich, die beiden Maßnahmen (aktiv verschwenkbare Gestängeachse/Pendelplatte) jeweils mit einer anderen Maßnahme zu kombinieren, die eine Dämpfung der durch die Beschleunigungskräfte hervorgerufenen Schwingungen ermöglicht. Beispielsweise kann die aktiv verschwenkbare Gestängeachse mit einer passiven Dämpfung des Verteilergestänges in Fahrtrichtung kombiniert werden. Dasselbe gilt für die aktive Schwingungsdämpfung durch die Pendelplatte, die mit einer weiteren, beispielsweise passiven Schwingungsdämpfung kombiniert werden kann.

Nachfolgend wird die Erfindung anhand von Ausführungsformen beschrieben, die in den Unteransprüchen angegeben sind.

So kann die Gestängeachse um eine vertikale Achse (Hochachse) für eine Gierbewegung des Verteilergestänges verschwenkbar sein. Diese bereits angesprochene aktive Schwingungsdämpfung ist vorteilhaft, um Beschleunigungskräfte bei Kurvenfahrten zu dämpfen.

Zweckmäßigerweise ist die Gestängeachse durch ein Kugelgelenk mit dem Rahmen verbunden, so dass die Gestängeachse wenigstens einen Freiheitsgrad um die vertikale Achse aufweist. Vorzugsweise ist der erste Stellantrieb zwischen der Gestängeachse und dem Rahmen angeordnet, der den Stellantrieb abstützt.

Vorzugsweise umfasst der erste Stellantrieb wenigstens zwei Kolben-Zylinder-Anordnungen oder wenigstens eine Kolben-Zylinder-Anordnung und einen Dämpfer. Die beiden Kolben-Zylinder-Anordnungen bzw. die Kolben-Zylinder-Anordnung und der Dämpfer sind jeweils auf beiden Seiten der Gestängeachse in Gegenüberstellung angeordnet. Vorzugsweise sind die beiden Kolben-Zylinder-Anordnungen bzw. die Kolben-Zylinder-Anordnung und der Dämpfer in einer horizontalen Ebene angeordnet, so dass die Gierbewegung um die Hochachse realisiert werden kann.

Für die Schwingungsdämpfung, hervorgerufen durch lineare Beschleunigungen, ist das Verteilergestänge linear in Fahrtrichtung bewegbar.

Bei einer bevorzugten Ausführungsform ist das Verteilergestänge durch einen Zwischenrahmen mit der Gestängeachse verbunden, wobei die Pendelplatte mit dem Verteilergestänge und mit dem Zwischenrahmen gelenkig verbunden ist. Der Zwischenrahmen ist dafür vorgesehen, ein Drehmoment um die Gestängeachse in das Verteilergestänge einzuleiten und dient der Neigungsverstellung und Dämpfung von Schwingungen des Verteilergestänges um die Gestängeachse (Pendelbewegung). Der Zwischenrahmen kann mit dem Rahmen verriegelt werden, so dass der Schwingungsausgleich um die Gestängeachse durch den Zwischenrahmen zu- oder abgeschaltet werden kann.

Die Kopplung des Verteilergestänges mit dem Rahmen erfolgt vorzugsweise über den Zwischenrahmen und die Pendelplatte. Konkret werden die auf das Verteilergestänge wirkenden linearen Kräfte in bzw. entgegen Fahrtrichtung in die Pendelplatte und von dort über den Zwischenrahmen in den Rahmen eingeleitet.

Bei einer weiter bevorzugten Ausführungsform ist der Stellantrieb zwischen dem Zwischenrahmen und dem Verteilergestänge angeordnet. Der Zwischenrahmen ist in Fahrtrichtung ortsfest, so dass das Verteilergestänge durch die Pendelplatte bei Betätigung des Stellantriebs relativ zum Zwischenrahmen und damit zum Rahmen bewegt wird.

Vorzugsweise umfasst der Stellantrieb eine doppelt wirkende Kolben-Zylinderanordnung oder wenigstens zwei Kolben-Zylinderanordnungen, die in Gegenüberstellung auf beiden Seiten des Zwischenrahmens angeordnet sind. Damit sind Bewegungen des Verteilergestänges in und entgegen Fahrtrichtung möglich.

Vorzugsweise sind das Verteilergestänge und der Rahmen, insbesondere der Zwischenrahmen, durch zwei Pendelplatten gelenkig gekoppelt oder gelenkig koppelbar, wobei die Pendelplatten eine Parallelogrammanordnung bilden. Bei Betätigung des Stellantriebs wird dadurch eine paralleltreue, translatorische Bewegung des Verteilergestänges erreicht, beispielsweise in oder entgegen Fahrtrichtung.

Bei einer besonders bevorzugten Ausführungsform bildet die mit dem Rahmen verbundene, schwenkbare Gestängeachse eine erste Gestängeachse, die mit einer zweiten in Fahrtrichtung weisenden Gestängeachse verbunden ist. Das Verteilergestänge ist um die zweite Gestängeachse drehbar. Die erste und zweite Gestängeachse sind durch die Pendelplatte gelenkig derart verbunden, dass das Verteilergestänge eine Gierbewegung und eine lineare Bewegung in oder entgegen Fahrtrichtung ausführen kann. Mit anderen Worten ist die Pendelaufhängung des Verteilergestänges von der Gesamtaufhängung des Verteilergestänges am Rahmen entkoppelt. Dafür sind zwei Gestängeachsen vorgesehen. Die beiden Gestängeachsen ermöglichen die aktive Dämpfung von Gierschwingungen durch die aktiv verstellbare erste Gestängeachse, ohne dass dabei die Pendelbewegung des Verteilergestänges um die zweite Gestängeachse beeinträchtigt wird. Durch die Kopplung der beiden Gestängeachsen durch die Pendelplatte ist die Überlagerung der verschiedenen Bewegungen des Verteilergestänges möglich. So ist das Verteilergestänge um die zweite in Fahrtrichtung weisende Gestängeachse drehbar und gleichzeitig aufgrund der Pendelplatte in oder entgegen Fahrtrichtung linear bewegbar. Da die zweite Gestängeachse über die Pendelplatte mit der ersten Gestängeachse verbunden ist, wird eine Schwenkbewegung der ersten Gestängeachse auf die zweite Gestängeachse und damit auf das Verteilergestänge übertragen.

Bei einer weiteren bevorzugten Ausführungsform ist der Zwischenrahmen um eine in Fahrtrichtung weisende Drehachse, insbesondere um die erste Gestängeachse, drehbar und mit dem Rahmen verriegelbar, wobei ein Stellzylinder zur Drehung des Verteilergestänges, insbesondere um die zweite Gestängeachse, einerseits mit dem Zwischenrahmen und andererseits mit dem Verteilergestänge verbunden ist. Die Möglichkeit, den Zwischenrahmen zu verriegeln und damit gegenüber dem Rahmen festzustellen, wird für den normalen Betriebsmodus genutzt, so dass der Stellzylinder die Neigungsstellung des Verteilergestänges um die zweite Drehachse bewirkt. Für den Fall, dass der Stellzylinder ausfällt, wird der Zwischenrahmen entriegelt und das Verteilergestänge in den Sicherheitsmodus überführt. Wenn beispielsweise eine Feder den Zwischenrahmen mit dem Rahmen verbindet, wird die Geradstellung des Verteilergestänges in an sich bekannter Weise durch Federkräfte erreicht. Die Feder kann beispielsweise als mechanische, hydraulische oder pneumatische Feder ausgestaltet sein.

Bei einer weiteren bevorzugten Ausgestaltung ist wenigstens ein Sensor zur Erfassung der Lage des Verteilergestänges, insbesondere der Pendelplatte, und/oder der Lage des Zwischenrahmens, insbesondere der Gestängeachse, vorgesehen ist. Mittels der Sensoren kann die Lage des Gestänges, insbesondere der Pendelplatte und/oder der Lage des Zwischenrahmens, insbesondere der Gestängeachse gemessen werden. Hierdurch können bei der Lageregelung des Gestänges die aktuelle Lage bei der Regelung berücksichtigt werden. Die Sensoren können beispielsweise die Zylinderstellung der Stellelemente erfassen oder es kann sich um Winkelsensoren handeln, welche an geeigneter Position zur Lageerfassung angebracht sind. So kann bspw, mittels der Sensoren erkannt werden, wenn die Drehung um die Hochachse und/oder die Translationsbewegung in/entgegen der Fahrtrichtung durch einen nahenden mechanischen Anschlag begrenzt wird, der bspw. den Maximalhub des als Stellantrieb eingesetzten Zylinders bildet. Auch kann so vorteilhaft für den jeweiligen Freiheitsgrad der Bewegung also die Rotation und/oder Translation zu geeigneten Zeitpunkten, also vorzugsweise wenn keine oder nur geringe Kräfte oder Beschleunigungen in der jeweiligen Richtung auftreten, eine Mittelstellung herbeigeführt werden. Hierdurch wird erreicht, dass der maximale Bewegungsspielraum für eine Rotationsbewegung und oder Translationsbewegung zur Verfügung steht.

Alternativ kann bei einer vorausbestimmten, nahenden Beschleunigung bzw. einem nahenden Auftreten von Beschleunigungskräften einer der Bewegungsfreiheitsgrade bewusst an einen Anschlag bewegt werden, um zur Minimierung der vorausbestimmten Beschleunigung die maximal mögliche Bewegung ausgehend vom Anschlag zu ermöglichen. Die maximal mögliche Bewegung kann bspw. der Maximalhub des als Stellantrieb verwendeten Zylinders sein. Der Anschlag kann in den Zylinder integriert sein.

Vorzugsweise weist die Maschine wenigstens einen Sensor zur Erfassung der Beschleunigung und/oder Geschwindigkeit und/oder Beschleunigungskraft der Maschine und/oder des Verteilergestänges und/oder eines Zugfahrzeugs der Maschine auf. Die gemessene Beschleunigung und/oder Geschwindigkeit und/oder Beschleunigungskraft geht in den Regelalgorithmus ein, der verwendet wird, um die Schwingungsdämpfung des Verteilergestänges aktiv zu regeln.

Das erfindungsgemäße Verfahren zum Betreiben einer landwirtschaftlichen Maschine beruht darauf, dass die Beschleunigung und/oder Belastung des Verteilergestänges gemessen und/oder berechnet wird. Davon abhängig wird ein Stellsignal an den ersten und/oder zweiten Stellantrieb übermittelt, um die Schwingungen des Verteilergestänges, insbesondere die Schwingungen des Verteilergestänges in oder entgegen Fahrtrichtung bzw. um die Hochachse, zu verringern. Zu den Vorteilen des Verfahrens wird auf die Ausführungen im Zusammenhang mit der landwirtschaftlichen Maschine verwiesen.

Die aktuelle Beschleunigung und/oder die aktuelle Belastung des Verteilergestänges können dabei gemessen werden, so dass die Regelung auf den aktuellen Fahrzustand reagiert. Zusätzlich oder alternativ kann die Regelung die prognostizierte zukünftige Beschleunigung und/oder zukünftige Belastung des Verteilergestänges eingehen, die beispielsweise aus der aktuellen Beschleunigung und/oder Belastung des Verteilergestänges und weiteren Informationen, wie beispielsweise den Lenkwinkel, berechnet wird.

In einer bevorzugten Ausgestaltung wird die aktuelle Lage des Gestänges und/oder des Zwischenrahmens bei der Ermittlung des Stellsignals berücksichtigt. Auf diese Weise kann die Lage zur Optimierung der Berechnung des Stellsignals herangezogen werden.

Die Erfindung wird nachfolgend mit weiteren Einzelheiten anhand eines Ausführungsbeispiels und den beigefügten schematischen Zeichnungen näher erläutert.

In diesen zeigen:
- Fig. 1: eine perspektivische Ansicht von schräg hinten der Aufhängung mit einem Mittelsegment des Verteilergestänges,
- Fig. 2: die Aufhängung gemäß Fig. 1 im Längsschnitt, ebenfalls perspektivisch von schräg hinten;
- Fig. 3: die Aufhängung gemäß Fig. 1 im Schnitt von links (gesehen in Fahrtrichtung),
- Fig. 4: eine Draufsicht von oben auf die Aufhängung gemäß Fig. 1;
- Fig. 5a, 5b, 5c: Hydraulikschaltpläne für den Antrieb des Verteilergestänges in bzw. entgegen Fahrtrichtung mit einem Wegeventil;
- Fig. 6a, 6b, 6c: schematische Darstellungen für einstellbare Feder-Dämpfersysteme;
- Fig. 7a, 7b, 7c: verschiedene Feder-Dämpfersysteme, basierend auf unterschiedlichen physikalischen Effekten;
- Fig. 8: einen hydraulischen Schaltplan für den Antrieb des Verteilergestänges in/entgegen Fahrtrichtung mit Druckregelventilen und
- Fig. 9: einen hydraulischen Schaltplan für den Antrieb der Gestängeachse mit Druckregelventilen.

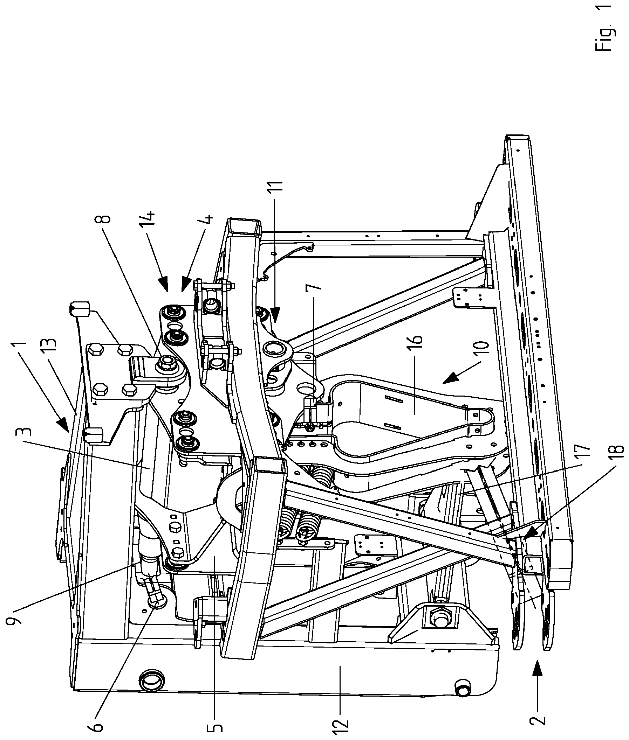

Fig. 1 zeigt ein Ausführungsbeispiel einer Aufhängung für eine landwirtschaftliche Maschine mit einem Verteilergestänge, das zum Ausbringen von Material, wie beispielsweise Düngemittel oder Pflanzenschutzmittel, eingesetzt wird. Derartige Maschinen sind beispielsweise als Feldspritzen, insbesondere in Kombination mit einem Zugfahrzeug, als selbstfahrende Maschine oder als Anbauelement an einem Schlepper realisiert. Die in Fig. 1 dargestellte Aufhängung ist für die vorgenannten Einsatzzwecke verwendbar. Andere Anwendungsmöglichkeiten für die Aufhängung sind denkbar, bei denen Verteilergestänge mit großen Arbeitsbreiten, ähnlich wie für landwirtschaftliche Maschinen, gehandhabt werden.

Fig. 1 zeigt die für das Verständnis der Funktionsweise wichtigen Bauteile der Aufhängung. Die Aufhängung umfasst einen Rahmen 1 und ein Verteilergestänge 2. Vom Verteilergestänge 2 ist nur das Mittelsegment dargestellt. Die seitlichen Gestängesegmente sind nicht dargestellt und in an sich bekannter Weise bspw. klappbar ausgebildet. Die Aufhängung des Verteilergestänges 2 erfolgt mittig und symmetrisch. Der Rahmen 1 kann als Hubrahmen ausgebildet sein, der höhenverstellbar ist. Alternativ kann der Rahmen 1 ortsfest ausgebildet sein. Der Rahmen 1 weist eine vertikale Grundstruktur 12 auf, an der ein sich in Fahrtrichtung nach hinten erstreckender, galgenförmiger Kragträger 13 ausgebildet ist. Der Kragträger 13 kann beispielsweise als Dreiecksgestänge ausgebildet sein.

Das Verteilergestänge 2 ist mit dem Rahmen 1 durch eine in Fahrtrichtung weisende erste Gestängeachse 3 gekoppelt. Die erste Gestängeachse 3 ist einerseits am in Fahrtrichtung hinteren Ende des Kragträgers 13 und andererseits im Grundgerüst 12 des Rahmens 1 gelagert. Wie in den Fig. 1 bis 4 gut zu erkennen, ist mit der Gestängeachse 3 ein Zwischenrahmen 10 verbunden, insbesondere drehfest verbunden. Der Zwischenrahmen 10 ist zwischen dem Grundgerüst 12 des Rahmens 1 und dem Verteilergestänge 2 angeordnet und dient der Kraftübertragung zwischen dem Verteilergestänge 2 und dem Rahmen sowie der Neigungsregelung bzw. Neigungssteuerung des Verteilergestänges 2 um die Gestängeachse 3.

Die Gestängeachse 3 kann auch als Gestängewelle bezeichnet werden, da diese drehbar im Rahmen 1 gelagert ist.

Der Zwischenrahmen 10 erstreckt sich von der Gestängeachse 3 bis in etwa zur Unterkante des Verteilergestänges 2. Das Verteilergestänge 2 ist mit dem Zwischenrahmen 10 verbunden und durch die erste Gestängeachse 3 am Rahmen 1 aufgehängt.

Die erste Gestängeachse 3 weist an einem Ende, konkret am in Fahrtrichtung hinteren Ende, ein Kugelgelenk 8 auf, das die erste Gestängeachse 3 mit dem Rahmen 1, konkret mit dem hinteren Ende des Kragträgers 13, verbindet. Durch das Kugelgelenk 8 ist der Zwischenrahmen 10 um eine in Fahrtrichtung weisende Drehachse drehbar, wenn der Zwischenrahmen 10 entriegelt ist. Außerdem erlaubt das Kugelgelenk 8 eine Schwenkbewegung der Gestängeachse 3 und damit des Zwischenrahmens 10 und des mit dem Zwischenrahmen 10 verbundenen Verteilergestänges 2 in einer horizontalen Ebene um die Hochachse bzw. vertikale Achse (Gierbewegung). Die Gierbewegung ist sowohl im ver- als auch entriegelten Zustand des Zwischenrahmens 10 möglich. Das Kugelgelenk kann als Kugelkopflager ausgebildet sein. Andere Lager, die eine Drehbewegung um eine in Fahrtrichtung weisende Drehachse und eine Schwenkbewegung der Gestängeachse 3 um die Hochachse erlauben, sind möglich.

Das andere, konkret in Fahrtrichtung vordere Ende der ersten Gestängeachse 3, das dem Kugelgelenk 8 gegenüber angeordnet ist, ist im Rahmen 1, konkret im Grundgerüst 12 des Rahmens 1, linear geführt, um die Schwenkbewegung um die Hochachse zu ermöglichen. Dazu weist der Rahmen 1 ein Langloch 9 auf, durch das das vordere Ende der ersten Gestängeachse 3 hindurchgeführt ist. Das Langloch 9 erstreckt sich senkrecht zur Fahrtrichtung in der horizontalen Schwenkebene der Gestängeachse 3. Das vordere Ende der ersten Gestängeachse 3 kann durch ein Gleitlager im Langloch 9 linear geführt.

Am vorderen Ende der ersten Gestängeachse 3 ist ein erster Stellantrieb 6 zwischen der Gestängeachse 3 und dem Rahmen 1 angeordnet. Durch den ersten Stellantrieb 6 kann die erste Gestängeachse 3 aktiv in der horizontalen Schwenkebene für eine Gierbewegung des Verteilergestänges 2 um die Hochachse hin- und herbewegt werden.

Bei dem Ausführungsbeispiel gemäß Fig. 1 bis 4 ist der erste Stellantrieb am in Fahrtrichtung vorderen Ende und das Kugelgelenk 8 für die horizontale Schwenkbewegung am in Fahrtrichtung hinteren Ende der ersten Gestängeachse 3 angeordnet. Der erste Stellantrieb 6 und das Kugelgelenk 8 können auch umgekehrt angeordnet sein. Die kinematische Umkehr führt zu demselben Ergebnis.

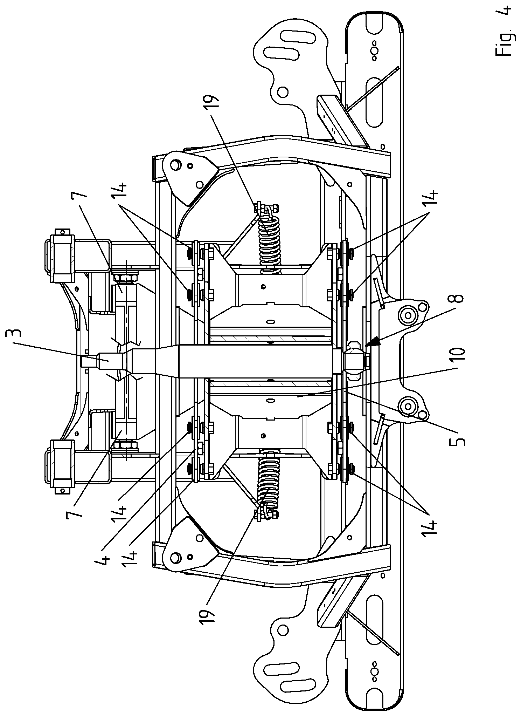

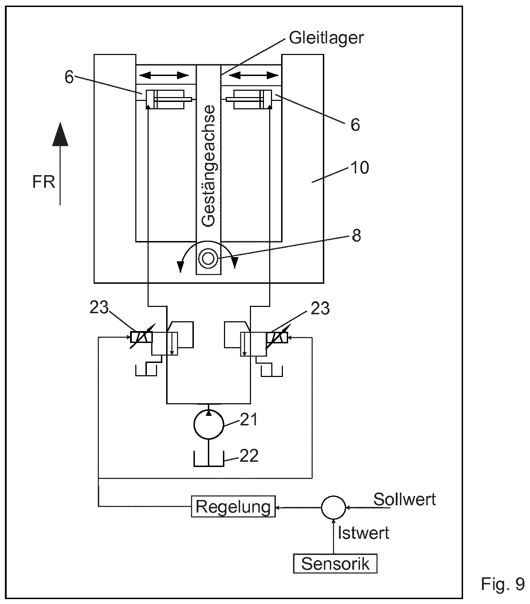

Wie in den Fig. 4 und 9 schematisiert dargestellt, kann der erste Stellantrieb 6 zwei Kolben-Zylinder-Anordnungen 7 umfassen, die in Gegenüberstellung auf beiden Seiten der ersten Gestängeachse 3 angeordnet sind. Alternativ kann der erste Stellantrieb 6 eine entsprechend angeordnete Kolben-Zylinder-Anordnung und einen Dämpfer umfassen. Es ist auch möglich, einen einzigen doppelt wirkenden Zylinder vorzusehen, der seitlich an der Gestängeachse 3 angreift. Allgemein soll die Gestängeachse 3 aktiv horizontal hin- und herbewegt werden können, um ein Verschwenken des Verteilergestänges 2 in beiden Drehrichtungen um die Hochachse zu bewirken. Diese Funktion kann beispielsweise dazu verwendet werden, um das Verteilergestänge 2 in Drehrichtung um die Hochachse vorzubeschleunigen, wenn eine Drehbeschleunigung beispielsweise wegen einer Kurvenfahrt ansteht.

Bei dem Ausführungsbeispiel gemäß Fig. 1 bis 4 ist die aktive Gierregelung mit einer nachfolgend im Detail beschriebenen aktiven Regelung des Verteilergestänges 2 in/entgegen Fahrtrichtung kombiniert. Das Ausführungsbeispiel bildet eine wirksame und robuste Gestängeaufhängung, die eine perspektivische oder voraussehende Regelung ermöglicht, die auf der zukünftigen Beschleunigung bzw. zukünftigen Belastung des Verteilergestänges, beruht und als Gegenmaßnahme eine entsprechende Vorbeschleunigung sowohl um die Hochachse als auch linear in/entgegen der Fahrtrichtung vorsieht.

Für die lineare Bewegung des Verteilergestänges sind zwei Pendelplatten 4, 5 vorgesehen, die das Verteilergestänge 2 mit dem Rahmen 1 gelenkig koppeln. Es ist möglich, nur eine Pendelplatte 4 für die gelenkige Kopplung vorzusehen und die andere Pendelplatte 5 durch einen anderen Koppelmechanismus zu ersetzen, der eine Parallelführung des Verteilergestänges 2 in/entgegen Fahrtrichtung ermöglicht. Bei den in den Fig. 1 bis 4 gezeigten Pendelplatten handelt es sich jeweils um Bleche, die eine ausreichende Festigkeit aufweisen, um die vom Verteilergestänge 2 eingeleiteten Kräfte und Momente auf den Zwischenrahmen 10 und von diesem auf den Rahmen 1 zu übertragen. Die geeignete Blechstärke wählt der Fachmann in Abhängigkeit von den zu erwartenden Kräften/Momenten aus. 5 bis 10 mm starke Stahlbleche reichen für eine normale Anwendung aus.

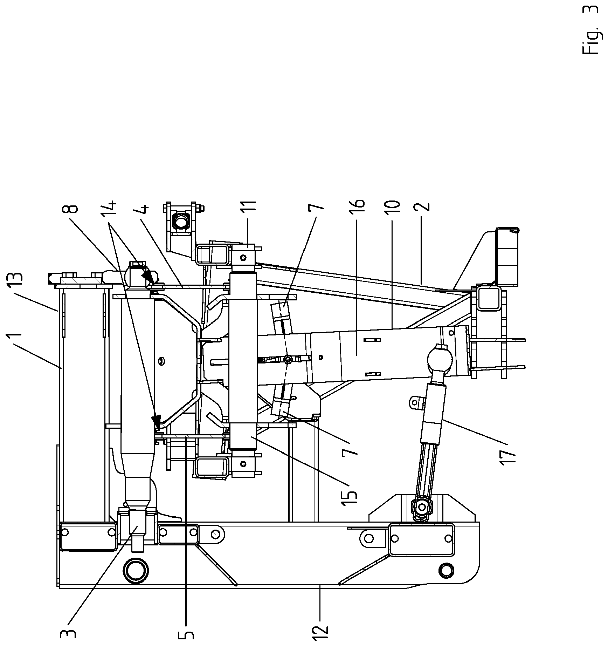

Die Pendelplatten 4, 5 sind senkrecht zur Fahrtrichtung angeordnet. Die beiden Pendelplatten 4, 5 bilden eine Parallelogrammanordnung, die eine paralleltreue lineare Bewegung des Verteilergestänges 2 in Fahrtrichtung bzw. entgegen Fahrtrichtung ermöglichen, wie in Fig. 3 zu sehen. Die beiden Pendelplatten 4, 5 weisen eine größere Längserstreckung in horizontaler Richtung als Breitenerstreckung in vertikaler Richtung auf. Insofern unterscheiden sich die Pendelplatten von einfachen Pendelstangen. Die Pendelplatten 4, 5 sind jeweils mittig, bezogen auf deren Längserstreckung in horizontaler Richtung und bezogen auf die Gestängeachse 3, angeordnet.

Die Verbindung der beiden Pendelplatten 4, 5 jeweils mit dem Zwischenrahmen 10 erfolgt durch Schwenklager 14, die eine Bewegung der Pendelplatten 4, 5 in Fahrtrichtung erlauben. Die Schwenklager 14 können als Kugellager oder allgemein als Wälzlager ausgebildet sein. Gleitlager sind auch möglich.

Die Schwenklager 14 verbinden die Pendelplatten 4, 5 jeweils mit dem Zwischenrahmen 10. Die Verbindung der Pendelplatten 4, 5 mit dem Verteilergestänge 2 ist starr. Es ist möglich, die gelenkige Verbindung und starre Verbindung umzukehren, so dass die Pendelplatten 4, 5 mit dem Verteilergestänge 2 gelenkig und mit dem Zwischenrahmen 10 starr verbunden sind. Es ist auch möglich, beide Anlenkstellen der Pendelplatten 4, 5 jeweils mit dem Zwischenrahmen 10 und dem Verteilergestänge 2 gelenkig auszubilden.

Die Schwenklager 14 sind jeweils an der Oberkante der Pendelplatten 4, 5 angeordnet. Die Verbindung der Pendelplatten 4, 5 zum Verteilergestänge 2 erfolgt an der Unterkante.

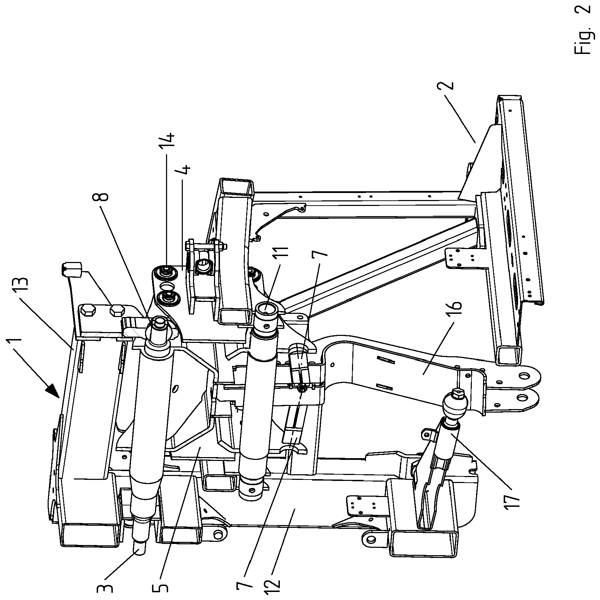

Wie in den Fig. 2, 3 gut zu erkennen, ist zwischen dem Zwischenrahmen 10 und dem Verteilergestänge 2 ein zweiter Stellantrieb 7 angeordnet, der das Verteilergestänge 2 in oder entgegen Fahrtrichtung zieht. Dazu greift der zweite Stellantrieb 7 einerseits am Zwischenrahmen 10 und andererseits am Verteilergestänge 2 an.

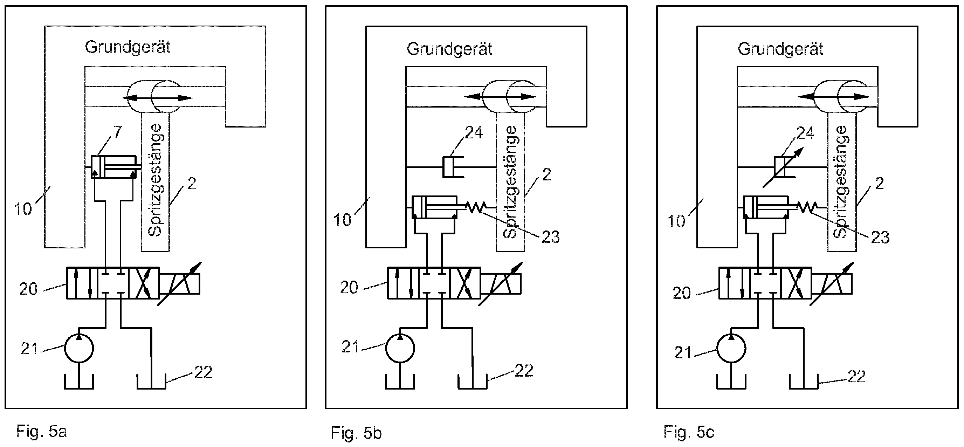

Der zweite Stellantrieb 7 ist unterhalb der beiden Pendelplatten 4, 5 angeordnet. Der zweite Stellantrieb 7 kann zwei Zylinder-Kolben-Anordnungen, insbesondere zwei Plungerzylinder, aufweisen, die, wie in Fig. 3 dargestellt, in Gegenüberstellung auf beiden Seiten des Zwischenrahmens 10 angeordnet sind. Um eine Drehung des Verteilergestänges 2 um die zweite Gestängeachse 11 zu ermöglichen, ist die Lagerung des zweiten Stellantriebes 7 am Zwischenrahmen 10 in einer Ebene senkrecht zur Fahrtrichtung beweglich ausgebildet. Damit kann der zweite Stellantrieb 7 eine Relativbewegung zwischen dem Verteilergestänge 2 und dem Zwischenrahmen 10 ausgleichen. Beispielsweise können die Kolbenstangen der Plunger-Zylinder des Stellantriebes 7 an einer nicht dargestellten horizontalen und senkrecht zur Fahrtrichtung orientierten Achse des Zwischenrahmens 10 aufliegen oder entlang der Achse verschieblich befestigt sein. Dazu können die Kolbenstangen an einem Gleitlager, bspw. einem Gleitring, befestigt sein, durch die vorstehend genannte Achse des Zwischenrahmens 10 geführt ist. Eine solche Lagerung ermöglicht eine Kraftübertragung zwischen dem Gestänge 2 und dem Zwischenrahmen 10 senkrecht zu der oben erwähnten Ebene mittels der Plunger-Zylinder. Bei einer Neigungsverstellung des Gestänges mittels des Stellzylinders 18 kann sich nun auf Grund der beweglichen Lagerung der Angriffspunkt der Zylinderkolben des Stellantriebes 7 entsprechend der Gestängeneigung verschieben. Andere Stellantriebe, wie beispielsweise in den Fig. 5a bis c, 6a bis c, 7a bis c und 8 dargestellt, sind möglich. Für die Vorbeschleunigung des Verteilergestänges 2 in Fahrtrichtung kommt es allgemein darauf an, dass das Verteilergestänge 2 aktiv in/entgegen Fahrtrichtung bewegt werden kann.

Der Zwischenrahmen 10 ist mit dem Rahmen 1 verriegelbar, um eine Drehbewegung des Zwischenrahmens 10 um die Gestängeachse 3 zu unterbinden. Dazu ist eine zusätzliche Drehlagerung des Verteilergestänges 3 um eine in Fahrtrichtung weisende Drehachse in Form einer zweiten Gestängeachse 11 vorgesehen, die in einer Ebene parallel mit der ersten Gestängeachse 3 angeordnet ist. Das Verteilergestänge 2 ist drehbar um die zweite Gestängeachse 11 gelagert. Die zweite Gestängeachse 11 ist mit der ersten Gestängeachse 3 durch die beiden Pendelplatten 4, 5 verbunden. Dazu ist eine Hülse 15 vorgesehen, in der die Gestängeachse 11 drehbar gelagert ist. Die Hülse 15 ist mit der Unterkante der beiden Pendelplatten jeweils verbunden, so dass eine lineare Bewegung des Verteilergestänges 2 in/entgegen Fahrtrichtung bei gleichzeitiger Drehbewegung des Verteilergestänges 2 um die zweite Gestängeachse 11 möglich ist.

Der Zwischenrahmen 10 weist ein herzförmiges Verriegelungsteil auf, das den unteren Teil des Zwischenrahmens 10 bildet. Das Verriegelungsherz 16 wirkt mit einem verstellbaren Riegel 17 des Rahmens 1 zusammen, der in der Verriegelungsstellung in das Verriegelungsherz 16 eingreift, wie in Fig. 3 gezeigt. In der Verriegelungsstellung ist der Zwischenrahmen 10, bezogen auf den Rahmen 1, ortsfest. In dieser Stellung des Zwischenrahmens 10 erfolgt die Neigungsverstellung des Verteilergestänges 2 durch einen Stellzylinder 18, der einerseits am Zwischenrahmen 10 und andererseits am Verteilergestänge 2 angreift (Fig. 1). Der Stellzylinder 18 bewirkt eine Drehung des Verteilergestänges 2 um die zweite Drehachse 11, wobei die vom Stellzylinder 18 eingeleiteten Kräfte vom festgestellten Zwischenrahmen 10 über die erste Gestängeachse 3 in den Rahmen 1 eingeleitet werden.

Für den Fall, dass der Stellzylinder 18 nicht ausreichend mit Druck versorgt wird, kann der Zwischenrahmen 10 entriegelt werden, indem der Riegel 17 das Verriegelungsherz 16 freigibt. Dann erfolgt bei verriegeltem Stellzylinder 18 eine automatische Zentrierung des Verteilergestänges 12 durch die zwischen dem Zwischenrahmen 10 und dem Rahmen 1 angeordneten Zentrierfedern 19, die beispielsweise in Fig. 4 dargestellt sind. Die aktive Regelung über die erste Gestängeachse 3 und die Pendelplatten 4, 5 ist weiterhin funktionsfähig, d.h. sowohl im Normalmodus als auch im Sicherheitsmodus. Die vorstehend beschriebene Möglichkeit, den Zwischenrahmen zu verriegeln bzw. zu entriegeln, kann auch als Ausstattungsvariante verwendet werden, wenn die aktive Neigungsverstellung durch den Stellzylinder 18 nicht gewünscht ist, sondern nur die automatische Zentrierung durch die Zentrierfeder 19.

Alternativ ist es möglich den Riegel auch in einem alternativen Normalmodus zu entriegeln. Hierbei wird wie oben die Neigungsverstellung mittels des Stellzylinders 18 durchgeführt und die durch die Neigung des Gestänges verursachten Kräfte auf den Zwischenrahmen 10 übertragen, so dass es bei Schrägstellung des Gestänges 2 auch zu einer Drehung des Zwischenrahmens 10 um die Gestängeachse 2 kommt. Die Kraftübertragung auf den Rahmen 1 erfolgt mittels der Federn 19. Der Vorteil dieser Ausführung, welche bei langsam ansprechender Neigungsregelung zum Einsatz kommt, ist, dass Erschütterungen, welche bei der Fahrt über hügeliges Gelände in die Maschine eingeleitet werden, durch die Federn gedämpft und somit nicht oder nur mit verminderter Intensität auf das Gestänge 2 übertragen werden.

Die Einstellung der Position des Verteilergestänges 2 in/entgegen Fahrtrichtung bzw. die Einstellung der Drehposition um die Hochachse kann auf der Basis von Daten aus einer oder mehreren Messeinrichtungen (nicht dargestellt) erfolgen. Die Messeinrichtung kann beispielsweise einen Beschleunigungssensor und/oder Dehnungsmessstreifen und/oder einen Geschwindigkeitssensor und/oder einen Kraftsensor umfassen, um die Beschleunigungskräfte, die auf das Verteilergestänge 2 wirken, zu ermitteln, indem diese entweder direkt gemessen oder berechnet werden. Für die Steuerung der Position des Verteilergestänges ist auf dem Arbeitsrechner des Zugfahrzeugs und/oder der Maschine ein entsprechendes Programm gespeichert. Dieses übernimmt die Regelung der Verteilergestängeposition auf Basis der Daten, welche von den zuvor beschriebenen Sensoren gemessen werden.

Nachfolgend werden verschiedene Beispiele beschrieben, wie die Hydraulik zur Ansteuerung der verschiedenen Stellantriebe 6, 7 zur Veränderung der Position des Verteilergestänges 2 ausgebildet sein können. Wie in den Fig. 5a, 5b, 5c gezeigt, kann ein Mehrwegeventil 20, beispielsweise ein 4/3-Wegeventil, als Proportionalventil verwendet werden. Das Mehrwegeventil 20 wird zur Ansteuerung des Stellantriebs 7 für die Linearbewegung des Verteilergestänges in Fahrtrichtung aufgrund der beiden Pendelplatten 4, 5 eingesetzt. Ein Anschluss des Mehrwegeventils 20 ist mit einer Pumpe 21 und ein weiterer mit einem Sumpf 22 verbunden. Die beiden weiteren Anschlüsse des Mehrwegeventils 20 mit einem doppelt wirkenden Zylinder als Stellantrieb 7 verbunden, der in der vorgeschriebenen Weise zwischen dem Zwischenrahmen 10 und dem Verteilergestänge 2 angeordnet ist. In den Fig. 5a, 5b, 5c ist die Mechanik vereinfacht dargestellt. Die Linearverschiebung des Verteilergestänges 2 ist durch den Doppelpfeil in Fahrtrichtung versinnbildlicht. Die dargestellte Hydraulik wird, ebenso wie die alternativen Hydrauliklösungen dieser Anmeldung explizit auch im Zusammenhang mit der Mechanik gemäß Fig. 1-4 offenbart.

Die Fig. 5a, 5b, 5c unterscheiden sich nur nach Art des Stellantriebs 7. In Fig. 5a ist ein einfacher doppelt wirkender Zylinder vorgesehen, dessen Druckkammern mit dem Mehrwegeventil entsprechend verbunden sind. Fig. 5b basiert auf der Ausgestaltung gemäß Fig. 5a und weist zusätzlich zu dem doppelt wirkenden Zylinder ein Federdämpfersystem auf, wobei der doppelt wirkende Zylinder über eine Feder mit dem Verteilergestänge 2 verbunden ist. Der Dämpfer ist zwischen den Zwischenrahmen 10 und das Verteilergestänge 2 geschaltet. Fig. 5c baut auf der Ausgestaltung gemäß Fig. 5b auf und ist dahingehend modifiziert, dass der Dämpfer zwischen dem Zwischenrahmen 10 und dem Verteilergestänge 2 einstellbar ist. Der Dämpfer hat das Bezugszeichen 24 und die Feder das Bezugszeichen 23.

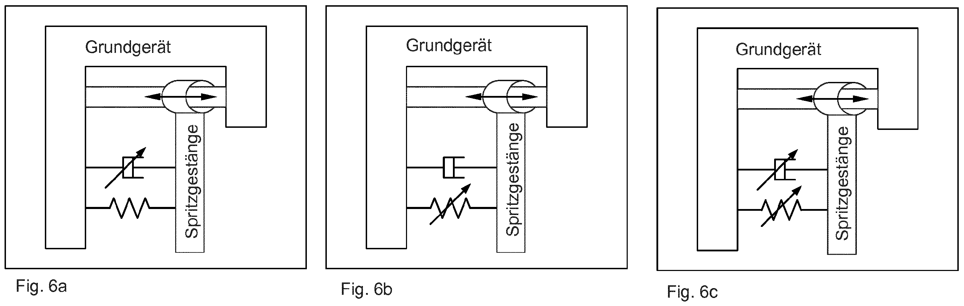

Die Fig. 6 a bis 6 c und 7 a bis c veranschaulichen die Möglichkeit, das Bewegungsverhalten des Gestänges in erfindungsgemäßer Weise auch mittels aktiver Ansteuerung einer Feder und/oder eines Dämpfers zu erreichen. Das Schwingungsverhalten der Feder bzw. das Dämpfungsverhalten des Dämpfers kann also aktiv beeinflusst werden. Hierfür bestehen verschiedene Möglichkeiten:
Dämpfungs- und Federsysteme, welche die Möglichkeit der aktiven Modifikation des Dämpfungs- und/oder Federungsverhaltens aufweisen, können ohne zusätzliche aktive Stellantriebe verwendet werden, um mittels eines modifizierten Bewegungsverhaltens des Gestänges Gier- und/oder Biegeschwingungen des Gestänges zu minimieren. Dabei können entweder der erste Stellantrieb 6 oder der zweite Stellantrieb 7 jeweils durch ein Dämpfungs- und Federsysteme gemäß Fig. 6 a bis 6 c und/oder 7 a bis c ersetzt werden. Damit ist wenigstens eine Komponente (erste Gestängeachse 3 / Pendelplatte 4) angetrieben und die andere Komponente (erste Gestängeachse 3 / Pendelplatte 4) verstellbar gedämpft und/oder verstellbar gefedert.

Alternativ können beide Stellantriebe 6, 7 durch ein Dämpfungs- und Federsysteme gemäß Fig. 6 a bis 6 c und/oder 7 a bis c ersetzt werden (s. nebengeordneten Anspruch 20).

Die Dämpfungs- und Federsysteme können jeweils als Kombination einer Feder und eines Dämpfers mit aktiv veränderbarem Dämpfungsverhalten (Fig. 6a), einer Kombination einer Feder mit aktiv veränderbarem Federungsverhalten und eines Dämpfers (Fig. 6b) und/oder einer Kombination einer Feder mit aktiv veränderbarem Federungsverhalten und eines Dämpfers mit aktiv veränderbarem Dämpfungsverhalten (Fig. 6c) ausgestaltet sein.

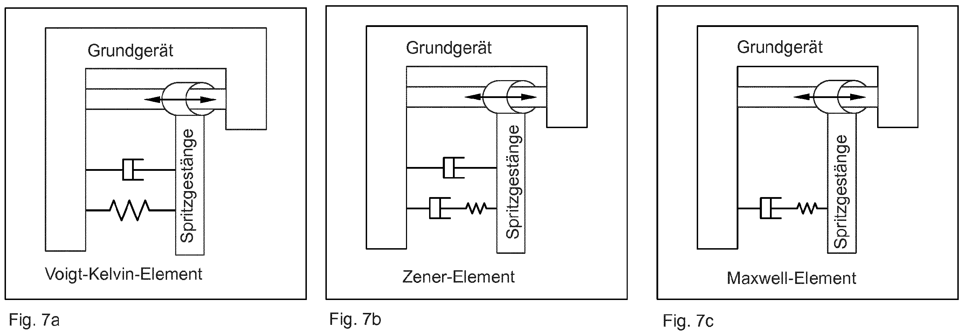

Die Dämpfungs- und Federsysteme können jeweils als Voigt-Kelvin-Element (Fig. 7a) und/oder Zener-Element (Fig. 7b) und/oder Maxwell-Element ausgebildet sein (Fig. 7c).

Die Anordnung der verstellbaren Elemente ist in Fig. 6 a bis c beispielhaft zwischen dem Gestänge und dem Grundgerät zur Beeinflussung des Bewegungsverhaltens des Gestänges 2 in Fahrtrichtung dargestellt und würde somit in dieser Ausführung den zweiten Stellantrieb 7 ersetzen oder alternativ mit diesem kombiniert werden. Es ist auch möglich, den ersten Stellantrieb 6 durch eines der verstellbaren Elemente gemäß Fig. 6 a bis c zu ersetzen oder alternativ mit diesem zu kombinieren, um hiermit das Bewegungsverhalten hinsichtlich des Gierens des Gestänges um die Hochachse aktiv zu beeinflussen.

Auch ist es denkbar, dass einer der Stellantriebe 6 oder 7 als aktives Element, also als Hydraulikzylinder oder als semiaktives Element, also als einstellbare Feder und/oder einstellbarer Dämpfer ausgeführt ist, während wie in den Fig. 7 a bis c dargestellt, der andere Stellantrieb als passives Element ausgebildet ist. Dieses können beispielsweise Kombinationen aus parallelgeschalteten Federn und Dämpfern (Fig. 7 a), eine Kombination aus einer Feder und einem Dämpfer mit parallelgeschaltetem Dämpfer (Fig. 7 b) oder eine einfache Kombination aus einer Feder und einem Dämpfer sein (Fig. 7 c). Die Anordnung der Elemente ist in Fig. 7 a bis c beispielhaft zwischen dem Gestänge und dem Grundgerät zur Beeinflussung des Bewegungsverhaltens des Gestänges 2 in Fahrtrichtung dargestellt und würde somit in dieser Ausführung den zweiten Stellantrieb 7 ersetzen oder alternativ, wie vorstehend erläutert, mit dem zweiten Stellantrieb 7 kombiniert werden. Der erste Stellantrieb 6 wäre entsprechend als aktives Element ausgeführt. Es ist auch möglich, den ersten Stellantrieb 6 als passives Element entsprechend den Fig. 7 a bis c auszuführen und den zweiten Stellantrieb 7 als aktives Element oder beide Stellantriebe als aktives Element. Ebenso ist es denkbar eine Kombination von aktiven und passiven Elementen vorzusehen, um die Gierbewegung des Gestänges 2 um die Hochachse zu steuern (Stellantrieb 6) und/oder eine Kombination von passiven oder aktiven Elementen vorzusehen um die translatorische Bewegung des Gestänges in/entgegen der Fahrtrichtung zu steuern (Stellantrieb 7).

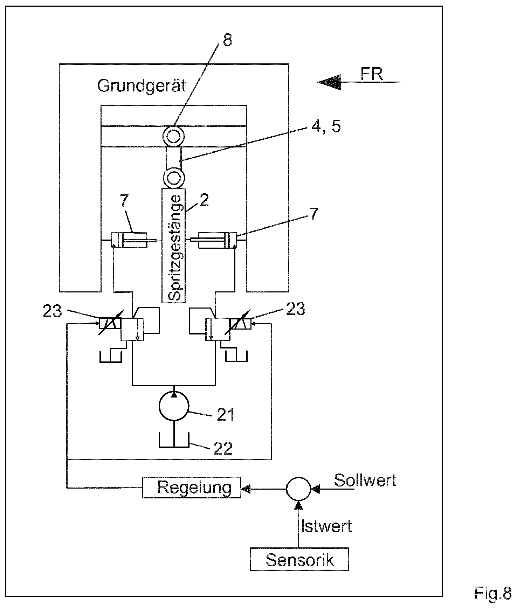

Fig. 8 zeigt eine Möglichkeit für einen Hydraulikschaltkreis zur Veränderung der Gestängeposition in/entgegen Fahrtrichtung zur aktiven Schwingungstilgung der Biegeschwingung. Dazu ist die Parallelogrammaufhängung mit den Pendelplatten 4, 5 vorgesehen, die in Fig. 8 schematisch angedeutet ist. Die Verstellung des Verteilergestänges 2 erfolgt durch zwei Kolben-Zylinder-Anordnungen, die in Fahrtrichtung auf beiden Seiten des Verteilergestänges angeordnet sind. Diese Anordnung entspricht im Prinzip der Anordnung des zweiten Stellantriebs 7 gemäß Figuren 1 bis 4 insofern, als der zweite Stellantrieb 7 allgemein zwischen dem Zwischenrahmen 10 bzw. dem Rahmen 1 und dem Verteilergestänge 2 angeordnet ist, und zwar in Fahrtrichtung, so dass eine entsprechende Bewegung in/entgegen Fahrtrichtung verursacht werden kann. Bei den beiden Kolben-Zylinder-Anordnungen handelt es sich jeweils um Plunger-Zylinder. Zur Ansteuerung der beiden Plunger-Zylinder sind entsprechende Druckregelventile 23 vorgesehen, die jeweils mit der Druckkammer des jeweiligen Plunger-Zylinders verbunden sind. Den Druckregelventilen 23 ist eine gemeinsame Pumpe 21 zugeordnet, die beide Druckregelventile 23 mit Hydraulikflüssigkeit versorgt. Die Regelung, wie in Fig. 8 dargestellt, basiert auf dem üblichen Ist/Sollwertvergleich, wobei aus dem Vergleich der gemessenen Daten beispielsweise am Verteilergestänge (Beschleunigung/Beschleunigungskraft) mit dem voreingestellten Sollwert eine Stellgröße berechnet wird, die dann zu einer entsprechenden Verstellung der Druckregelventile 23 führt.

Der Hydraulikschaltplan gemäß Fig. 9 entspricht dem Schaltplan gemäß Fig. 8 und wird für die Verstellung der ersten Gestängeachse 3 eingesetzt. Dazu sind die beiden Druckregelventile 23 jeweils mit zwei Plunger-Zylindern (erster Stellantrieb 6) verbunden, die seitlich zwischen der Gestängeachse 3 und dem Rahmen 10 angeordnet sind.

An Stelle der vorgenannten Kolben-Zylinder-Anordnungen können andere Stellantriebe 6, 7 verwendet werden, beispielsweise Pneumatikzylinder, fluidische Muskeln, Elektromotoren oder Hydraulikmotoren.

Nachfolgend wird die Funktionsweise der vorstehend beschriebenen Aufhängung näher erläutert. Sinn und Zweck der Regelung ist es, eine aktive Schwingungstilgung bei Schwingungen in Fahrtrichtung, d.h. lineare Verformungen des Verteilergestänges und/oder Schwingungen um die Hochachse, d.h. Gierschwingungen, zu minimieren. Hierfür gibt es zwei Möglichkeiten. Das Regel- und Steuersystem der landwirtschaftlichen Maschine misst die aktuellen Daten am Verteilergestänge 2, wie beispielsweise die lineare Beschleunigung oder Drehbeschleunigung oder die auf das Verteilergestänge entsprechend wirkenden Kräfte. Aus dem Vergleich mit einem entsprechenden Sollwert wird in einem Regelkreis ein Stellsignal generiert, das den ersten Stellantrieb 6 entsprechend ansteuert und durch eine Bewegung des Verteilergestänges 2 um die Hochachse und/oder in Fahrtrichtung die Beschleunigungskräfte verringert. In einer Weiterentwicklung können an Stelle der aktuellen Daten prognostizierte Daten verwendet werden, um frühzeitig auf Belastungsspitzen durch eine Verstellung des Verteilergestänges 2 um die Hochachse reagieren zu können. Dazu kann beispielsweise die Drehgeschwindigkeit/Drehbeschleunigung eines Zugfahrzeugs bestimmt werden, bevor die gezogene Maschine mit dem Verteilergestänge 2 die entsprechende Kurvenfahrt im Nachlauf zum Zugfahrzeug beginnt. Damit können die zu erwartenden Beschleunigungskräfte, die auf das Verteilergestänge 2 während der Kurvenfahrt wirken, vorausberechnet werden. Durch die Vorausberechnung ist es möglich, das Verteilergestänge 2 in Richtung der Drehbeschleunigung vorzubeschleunigen, so dass die Gesamtbeschleunigung und damit die Beschleunigungskräfte, die auf das Verteilergestänge 2 wirken, verringert werden. Die Vorausbeschleunigung bzw. generell die aktive Schwingungstilgung wird dadurch erreicht, dass die erste Gestängeachse 3 in der Horizontalebene bzw. Schwenkebene so verschwenkt wird, dass das Verteilergestänge 2 um die Hochachse gedreht wird.

Die Funktionsweise der in/entgegen Fahrtrichtung wirkenden Linearverstellung des Verteilergestänges 2 entspricht im Prinzip der vorstehend beschriebenen Funktionsweise zur Tilgung von Drehschwingungen. Hierbei werden die linearen Beschleunigungskräfte in/entgegen Fahrtrichtung gemessen oder berechnet, beispielsweise mittels Dehnungsmessstreifen oder durch entsprechende Beschleunigungssensoren. Auch hier kann entweder auf den aktuellen Belastungswert durch eine entsprechende Verstellung des Verteilergestänges in/entgegen Fahrtrichtung reagiert werden. Alternativ können prognostizierte Beschleunigungskräfte durch eine frühzeitige Vorbeschleunigung des Verteilergestänges verringert werden. Die Vorbeschleunigung erfolgt durch den zweiten Stellantrieb, der das Verteilergestänge, das an den beiden Pendelplatten 4, 5 aufgehängt ist, entsprechend verstellt.

Die aktive Regelung des Verteilergestänges dient nicht nur als Überlastschutz, sondern verbessert durch aktive Schwingungstilgung die gleichmäßige Ausbringung von Material, wie Düngemittel oder Pflanzenschutzmittel.

## Patentansprüche

1. Aufhängung für eine landwirtschaftliche Maschine mit einem Rahmen (1) und einem Verteilergestänge (2), das durch wenigstens eine in Fahrtrichtung weisende Gestängeachse (3) mit dem Rahmen (1) verbunden ist, **dadurch gekennzeichnet, dass** die Gestängeachse (3) schwenkbar mit dem Rahmen (1) verbunden und durch einen ersten Stellantrieb (6) verschwenkbar ist und/oder das Verteilergestänge (2) und der Rahmen (1) durch wenigstens eine Pendelplatte (4) gelenkig gekoppelt oder gelenkig koppelbar sind, wobei das Verteilergestänge (2) durch einen zweiten Stellantrieb (7) verschwenkbar ist.

2. Aufhängung nach Anspruch 1, **dadurch gekennzeichnet, dass** die Gestängeachse (3) um eine vertikale Achse für eine Gierbewegung des Verteilergestänges (2) verschwenkbar ist.

3. Aufhängung nach Anspruch 1 oder 2, **dadurch gekennzeichnet, dass** die Gestängeachse (3) durch ein Kugelgelenk (8) mit dem Rahmen (1) verbunden ist.

4. Aufhängung nach einem der vorhergehenden Ansprüche, **dadurch gekennzeichnet, dass** der erste Stellantrieb (6) zwischen der Gestängeachse (3) und dem Rahmen (1) angeordnet ist.

5. Aufhängung nach einem der vorhergehenden Ansprüche, **dadurch gekennzeichnet, dass** der erste Stellantrieb (6) wenigstens zwei Kolben-Zylinderanordnungen oder wenigstens eine Kolben-Zylinderanordnung und einen Dämpfer umfasst, die auf beiden Seiten der Gestängeachse (3) in Gegenüberstellung angeordnet sind.

6. Aufhängung nach einem der vorhergehenden Ansprüche, **dadurch gekennzeichnet, dass** das Verteilergestänge (2) linear in Fahrtrichtung bewegbar ist.

7. Aufhängung nach einem der vorhergehenden Ansprüche, **dadurch gekennzeichnet, dass** das Verteilergestänge (2) durch einen Zwischenrahmen (10) mit der Gestängeachse (3) verbunden ist, wobei die Pendelplatte (4) mit dem Verteilergestänge (2) und mit dem Zwischenrahmen (10) gelenkig verbunden ist.

8. Aufhängung nach Anspruch 7, **dadurch gekennzeichnet, dass** der zweite Stellantrieb (7) zwischen dem Zwischenrahmen (10) und dem Verteilergestänge (2) angeordnet ist

9. Aufhängung nach Anspruch 8, **dadurch gekennzeichnet, dass** der zweite Stellantrieb (7) eine doppeltwirkende Kolben-Zylinderanordnung oder wenigstens zwei Kolben-Zylinderanordnungen aufweist, die in Gegenüberstellung auf beiden Seiten des Zwischenrahmens (10) angeordnet sind.

10. Aufhängung nach einem der vorhergehenden Ansprüche, **dadurch gekennzeichnet, dass** das Verteilergestänge (2) und der Rahmen (1), insbesondere der Zwischenrahmen (10), durch zwei Pendelplatten (4, 5) gelenkig gekoppelt oder gelenkig koppelbar sind, wobei die Pendelplatten (4, 5) eine Parallelogrammanordnung bilden.

11. Aufhängung nach einem der vorhergehenden Ansprüche, **dadurch gekennzeichnet, dass** die mit dem Rahmen (1) verbundene, schwenkbare Gestängeachse (3) eine erste Gestängeachse bildet, die mit einer zweiten in Fahrtrichtung weisenden Gestängeachse (11) verbunden ist, um die das Verteilergestänge (2) drehbar ist, wobei die erste und zweite Gestängeachse (3, 11) durch die Pendelplatte (4) gelenkig derart verbunden sind, dass das Verteilergestänge (2) eine Gierbewegung und eine lineare Bewegung in oder entgegen Fahrtrichtung ausführen kann.

12. Aufhängung nach einem der Ansprüche 7 bis 11, **dadurch gekennzeichnet, dass** der Zwischenrahmen (10) um eine in Fahrtrichtung weisende Drehachse, insbesondere um die erste Gestängeachse (3), drehbar und mit dem Rahmen (1) verriegelbar ist, wobei ein Stellzylinder zur Drehung des Verteilergestänges (2), insbesondere um die zweite Gestängeachse (11), einerseits mit dem Zwischenrahmen (10) und andererseits mit dem Verteilergestänge (2) verbunden ist.

13. Aufhängung nach einem der Ansprüche 7 bis 12, **dadurch gekennzeichnet, dass** wenigstens eine Feder den Zwischenrahmen (10) mit dem Rahmen (1) verbindet.

14. Aufhängung nach einem der vorhergehenden Ansprüche, **dadurch gekennzeichnet, dass** wenigstens ein Sensor zur Erfassung der Beschleunigung und/oder Geschwindigkeit und/oder Beschleunigungskraft der Maschine und/oder des Verteilergestänges (2) und/oder eines Zugfahrzeugs der Maschine vorgesehen ist.

15. Aufhängung nach einem der vorhergehenden Ansprüche, **dadurch gekennzeichnet, dass** wenigstens ein Sensor zur Erfassung der Lage des Verteilergestänges (2), insbesondere der Pendelplatte (4,5), und/oder der Lage des Zwischenrahmens (10), insbesondere der Gestängeachse (3), vorgesehen ist.

16. Landwirtschaftliche Maschine mit einer Aufhängung nach einem der vorhergehenden Ansprüche.

17. Verfahren zum Betreiben einer Maschine nach Anspruch 16, bei dem die Beschleunigung und/oder Belastung des Verteilergestänges (2) gemessen und/oder berechnet und davon abhängig ein Stellsignal an den ersten und/oder zweiten Stellantrieb (6, 7) übermittelt wird, um die Schwingungen des Verteilergestänges (2), insbesondere die Schwingungen des Verteilergestänges (2) in oder entgegen der Fahrtrichtung und/oder um die vertikale Achse, zu verringern.

18. Verfahren nach Anspruch 17, **dadurch gekennzeichnet, dass** die aktuelle Beschleunigung und/oder Belastung des Verteilergestänges (2) gemessen und/oder die zukünftige Beschleunigung und/oder Belastung des Verteilergestänges (2) berechnet wird.

19. Verfahren nach Anspruch 17 oder 18, **dadurch gekennzeichnet, dass** die aktuelle Lage des Verteilergestänges (2) und/oder des Zwischenrahmens (10) gemessen und bei der Ermittlung des Stellsignals berücksichtigt wird.

20. Aufhängung für eine landwirtschaftliche Maschine mit einem Rahmen (1) und einem Verteilergestänge (2), das durch wenigstens eine in Fahrtrichtung weisende Gestängeachse (3) mit dem Rahmen (1) verbunden ist, **dadurch gekennzeichnet, dass** die Gestängeachse (3) einerseits schwenkbar mit dem Rahmen (1) und andererseits mit einem ersten einstellbaren Feder-Dämpferelement verbunden ist und/oder das Verteilergestänge (2) und der Rahmen (1) durch wenigstens eine Pendelplatte (4) gelenkig gekoppelt oder gelenkig koppelbar sind, wobei das Verteilergestänge (2) mit einem zweiten einstellbaren Feder-Dämpferelement verbunden ist.

## Claims

1. Suspension for an agricultural machine, having a frame (1) and a spreader boom (2) which is connected to the frame (1) by means of at least one boom axle (3) pointing in a direction of travel, **characterized in that** the boom axle (3) is pivotably connected to the frame (1) and is pivotable by means of a first actuating drive (6), and/or the spreader boom (2) and the frame (1) are articulatedly coupled or articulatedly couplable by means of at least one pendulum plate (4), wherein the spreader boom (2) is pivotable by means of a second actuating drive (7).

2. Suspension according to Claim 1, **characterized in that** the boom axle (3) is pivotable about a vertical axis for a yaw movement of the spreader boom (2).

3. Suspension according to Claim 1 or 2, **characterized in that** the boom axle (3) is connected to the frame (1) by means of a ball joint (8).

4. Suspension according to any of the preceding claims, **characterized in that** the first actuating drive (6) is arranged between the boom axle (3) and the frame (1) .

5. Suspension according to any of the preceding claims, **characterized in that** the first actuating drive (6) comprises at least two piston-cylinder arrangements or at least one piston-cylinder arrangement and a damper, which are arranged in oppositely situated fashion on both sides of the boom axle (3).

6. Suspension according to any of the preceding claims, **characterized in that** the spreader boom (2) is movable linearly in a direction of travel.

7. Suspension according to any of the preceding claims, **characterized in that** the spreader boom (2) is connected by means of an intermediate space (10) to the boom axle (3), wherein the pendulum plate (4) is articulatedly connected to the spreader boom (2) and to the intermediate frame (10).

8. Suspension according to Claim 7, **characterized in that** the second actuating drive (7) is arranged between the intermediate frame (10) and the spreader boom (2).

9. Suspension according to Claim 8, **characterized in that** the second actuating drive (7) has a double-acting piston-cylinder arrangement or at least two piston-cylinder arrangements, which are arranged in oppositely situated fashion on both sides of the intermediate frame (10).

10. Suspension according to any of the preceding claims, **characterized in that** the spreader boom (2) and the frame (1), in particular the intermediate frame (10), are articulatedly coupled or articulatedly couplable by means of two pendulum plates (4, 5), wherein the pendulum plates (4, 5) form a parallelogram arrangement.

11. Suspension according to any of the preceding claims, **characterized in that** the pivotable boom axle (3) connected to the frame (1) forms a first boom axle, which is connected to a second boom axle (11) pointing in a direction of travel, about which second boom axle the spreader boom (2) is rotatable, wherein the first and second boom axles (3, 11) are articulatedly connected by means of the pendulum plate (4) such that the spreader boom (2) can perform a yaw movement and a linear movement in or counter to the direction of travel.

12. Suspension according to any of Claims 7 to 11, **characterized in that** the intermediate frame (10) is rotatable about an axis of rotation pointing in the direction of travel, in particular about the first joint axle (3), and is lockable to the frame (1), wherein an actuating cylinder for rotating the spreader boom (2), in particular about the second boom axle (11), is connected at one side to the intermediate frame (10) and at the other side to the spreader boom (2) .

13. Suspension according to any of Claims 7 to 12, **characterized in that** at least one spring connects the intermediate frame (10) to the frame (1).

14. Suspension according to any of the preceding claims, **characterized in that** at least one sensor for detecting the acceleration and/or speed and/or acceleration force of the machine and/or of the spreader boom (2) and/or of a tractor vehicle of the machine is provided.

15. Suspension according to any of the preceding claims, **characterized in that** at least one sensor for detecting the position of the spreader boom (2), in particular of the pendulum plate (4, 5), and/or the position of the intermediate frame (10), in particular of the boom axle (3), is provided.

16. Agricultural machine having a suspension according to any of the preceding claims.

17. Method for operating a machine according to Claim 16, in which method the acceleration and/or loading of the spreader boom (2) is measured and/or calculated and, in a manner dependent thereon, an actuating signal is transmitted to the first and/or second actuating drive (6, 7) in order to reduce the vibrations of the spreader boom (2), in particular the vibrations of the spreader boom (2) in or counter to the direction of travel and/or about the vertical axis.

18. Method according to Claim 17, **characterized in that** the present acceleration and/or loading of the spreader boom (2) is measured and/or the future acceleration and/or loading of the spreader boom (2) is calculated.

19. Method according to Claim 17 or 18, **characterized in that** the present position of the spreader boom (2) and/or of the intermediate frame (10) is measured and is taken into consideration in the determination of the actuating signal.

20. Suspension for an agricultural machine having a frame (1) and having a spreader boom (2) which is connected to the frame (1) by means of at least one boom axle (3) pointing in the direction of travel, **characterized in that** the boom axle (3) is at one side connected pivotably to the frame (1) and is at the other side connected to a first adjustable spring-damper element, and/or the spreader boom (2) and the frame (1) are articulatedly coupled or articulatedly couplable by means of at least one pendulum plate (4), wherein the spreader boom (2) is connected to a second adjustable spring-damper element.

## Revendications

1. Suspension pour une machine agricole dotée d'un cadre (1) et d'une rampe de pulvérisation (2), laquelle est raccordée au cadre (1) par au moins un axe de rampe (3) orienté dans la direction de la marche, **caractérisée en ce que** l'axe de rampe (3) est raccordé au cadre (1) de manière pivotante et peut tourner grâce à un premier actionneur (6) et/ou la rampe de pulvérisation (2) et le cadre (1) sont ou peuvent être couplés de manière articulée par au moins un plateau oscillant (4), dans laquelle la rampe de pulvérisation (2) peut tourner grâce à un deuxième actionneur (7).

2. Suspension selon la revendication 1, **caractérisée en ce que** l'axe de rampe (3) peut tourner autour d'un axe vertical pour un mouvement en lacets de la rampe de pulvérisation (2).

3. Suspension selon la revendication 1 ou 2, **caractérisée en ce que** l'axe de rampe (3) est raccordé au cadre (1) par une articulation sphérique (8).

4. Suspension selon l'une des revendications précédentes, **caractérisée en ce que** le premier actionneur (6) est agencé entre l'axe de rampe (3) et le cadre (1).

5. Suspension selon l'une des revendications précédentes, **caractérisée en ce que** le premier actionneur (6) comprend au moins deux agencements piston-cylindre ou au moins un agencement piston-cylindre et un amortisseur, qui sont agencés des deux côtés de l'axe de rampe (3) en juxtaposition.

6. Suspension selon l'une des revendications précédentes, **caractérisée en ce que** la rampe de pulvérisation (2) est mobile de façon linéaire dans la direction de la marche.

7. Suspension selon l'une des revendications précédentes, **caractérisée en ce que** la rampe de pulvérisation (2) est raccordée à l'axe de rampe (3) par un cadre intermédiaire (10), dans laquelle le plateau oscillant (4) est raccordé de manière articulée à la rampe de pulvérisation (2) et au cadre intermédiaire (10).

8. Suspension selon la revendication 7, **caractérisée en ce que** le deuxième actionneur (7) est agencé entre le cadre intermédiaire (10) et la rampe de pulvérisation (2).

9. Suspension selon la revendication 8, **caractérisée en ce que** le deuxième actionneur (7) comporte un agencement piston-cylindre à double effet ou au moins deux agencements piston-cylindre, qui sont agencés des deux côtés du cadre intermédiaire (10) en juxtaposition.

10. Suspension selon l'une des revendications précédentes, **caractérisée en ce que** la rampe de pulvérisation (2) et le cadre (1), en particulier le cadre intermédiaire (10), sont ou peuvent être couplés de manière articulée par deux plateaux oscillants (4, 5), dans laquelle les plateaux oscillants (4, 5) forment un agencement en parallélogramme.

11. Suspension selon l'une des revendications précédentes, **caractérisée en ce que** l'axe de rampe (3) pivotant, raccordé au cadre (1) forme un premier axe de rampe, qui est raccordé avec un deuxième axe de rampe (11) orienté dans la direction de la marche, autour duquel la rampe de pulvérisation (2) peut tourner, dans laquelle le premier et le deuxième axe de rampe (3, 11) sont raccordés de manière articulée par le plateau oscillant (4) de telle sorte que la rampe de pulvérisation (2) peut effectuer un mouvement de lacets et un mouvement linéaire dans ou contre la direction de la marche.

12. Suspension selon l'une des revendications 7 à 11, **caractérisée en ce que** le cadre intermédiaire (10) peut tourner autour d'un axe de rotation orienté dans la direction de la marche, en particulier autour du premier axe de rampe (3) et peut être verrouillé avec le cadre (1), dans laquelle un vérin est raccordé d'un côté au cadre intermédiaire (10) et de l'autre côté à la rampe de pulvérisation (2) pour la rotation de la rampe de pulvérisation (2), en particulier autour du deuxième axe de rampe (11).

13. Suspension selon l'une des revendications 7 à 12, **caractérisée en ce qu'**au moins un ressort raccorde le cadre intermédiaire (10) et le cadre (1).

14. Suspension selon l'une des revendications précédentes, **caractérisée en ce qu'**est prévu au moins un capteur destiné à saisir l'accélération et/ou la vitesse et/ou la force d'accélération de la machine et/ou de la rampe de pulvérisation (2) et/ou d'un véhicule tracteur de la machine.

15. Suspension selon l'une des revendications précédentes, **caractérisée en ce qu'**est prévu au moins un capteur destiné à saisir la position de la rampe de pulvérisation (2), en particulier du plateau oscillant (4, 5), et/ou la position du cadre intermédiaire (10), en particulier de l'axe de rampe (3).

16. Machine agricole dotée d'une suspension selon l'une des revendications précédentes.

17. Procédé de mise en oeuvre d'une machine selon la revendication 16, où l'accélération et/ou la charge de la rampe de pulvérisation (2) est mesurée et/ou calculée et, en fonction, un signal de commande est transmis au premier et/ou au deuxième actionneur (6, 7), afin de réduire les oscillations de la rampe de pulvérisation (2), en particulier les oscillations de la rampe de pulvérisation (2) dans ou contre la direction de la marche et/ou autour de l'axe vertical.

18. Procédé selon la revendication 17, **caractérisé en ce que** l'accélération et/ou la charge actuelle de la rampe de pulvérisation (2) est mesurée et/ou l'accélération et/ou la charge future de la rampe de pulvérisation (2) est calculée.

19. Procédé selon la revendication 17 ou 18, **caractérisé en ce que** la position actuelle de la rampe de pulvérisation (2) et/ou du cadre intermédiaire (10) est mesurée et est prise en compte lors de l'émission du signal de commande.

20. Suspension pour une machine agricole dotée d'un cadre (1) et d'une rampe de pulvérisation (2), laquelle est raccordée au cadre (1) par au moins un axe de rampe (3) orienté en direction de la marche, **caractérisée en ce que** l'axe de rampe (3) est raccordé d'un côté au cadre (1) de manière pivotante et d'un autre côté à un premier élément amortisseur à ressort ajustable et/ou la rampe de pulvérisation (2) et le cadre (1) sont ou peuvent être couplés de manière articulée par au moins un plateau oscillant (4), dans laquelle la rampe de pulvérisation (2) est raccordée à un deuxième élément amortisseur à ressort ajustable.
